(19) Europäisches Patentamt
European Patent Office
Office européen des brevets

(11) **EP 4 220 224 B1**

(12) **EUROPEAN PATENT SPECIFICATION**

(45) Date of publication and mention
of the grant of the patent:
**21.05.2025 Bulletin 2025/21**

(21) Application number: **22153358.1**

(22) Date of filing: **26.01.2022**

(51) International Patent Classification (IPC):
*G01S 13/72* *(2006.01)*   *G01S 13/931* *(2020.01)*
*G01S 17/66* *(2006.01)*   *G01S 17/86* *(2020.01)*
*G01S 17/931* *(2020.01)*   *G01S 7/295* *(2006.01)*
*G01S 13/58* *(2006.01)*   *G01S 13/86* *(2006.01)*

(52) Cooperative Patent Classification (CPC):
**G01S 17/931; G01S 7/2955; G01S 13/726;**
**G01S 13/931; G01S 17/66; G01S 17/86;**
G01S 13/588; G01S 13/865; G01S 13/867;
G01S 2013/9323

(54) **METHOD AND DEVICE FOR DETECTING AND TRACKING OBJECTS AND DRIVER ASSISTANCE SYSTEM**

VERFAHREN UND VORRICHTUNG ZUR ERKENNUNG UND VERFOLGUNG VON OBJEKTEN UND FAHRERASSISTENZSYSTEM

PROCÉDÉ ET DISPOSITIF DE DÉTECTION ET DE SUIVI D'OBJETS ET SYSTÈME D'ASSISTANCE AU CONDUCTEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**02.08.2023 Bulletin 2023/31**

(73) Proprietor: **Robert Bosch GmbH**
**70442 Stuttgart (DE)**

(72) Inventors:
• **Remenyi, Istvan**
**2890 Tata (HU)**
• **Karasz, Zoltan**
**1141 Budapest (HU)**

(56) References cited:
**US-A1- 2015 198 711    US-A1- 2016 018 219**
**US-A1- 2021 080 558**

**Description**

The present invention relates to a method and a device for detecting and tracking objects in a surrounding of a vehicle. The invention further relates to a driver assistance system.

Prior Art

Driver assistance systems rely on the detection of objects in a surrounding of the vehicle. Modern vehicles can comprise multiple sensors of different types, such as radar sensors, cameras, infrared sensors, lidar sensors and the like. US 2021/080558 A1 relates to extended object tracking. US 2015/198711 A1 relates to an object fusion system. US 2016/018219 A1 relates to an estimation apparatus.

Based on the sensor data, objects can be identified. For example, a radar sensor can emit radar signals which are reflected by objects in a surrounding of the vehicle. The coordinates of the reflecting objects can be determined by analyzing the received radar signals. Each of the recognized objects can be tracked over time. For example, the moving directions or velocities of the tracked candidate objects can be determined. Such information is important to estimate the likelihoods of possible events, such as a possible collision with another vehicle. Based on this information, the driver assistance systems can inform the driver of possibly dangerous situations or can control functions of the vehicle, such as an adjustment of the speed or the steering angle of the vehicle.

For tracking objects, newly detected measurements must be associated with already tracked candidate objects, if possible. Tracking solutions are taking care of the association problem between objects detected in a subsequent frame by creating dynamic entities with a predefined lifespan. Although there are various solutions, due to the computation resource limitations, usually modeling assumptions have to be introduced. Filtering techniques (like Kalman filtering) can give a procedure-skeleton to such assumptions, in which the main steps are the following: prediction of the state of the observed objects for the next timestamp, the association between the predicted state of the object and the measurement at the next timestamp, and an update of the state of the observed object for further tracking.

Implementation of radar detection systems may comprise rule-based filtering. Reliable locations may be identified as object candidates which are fed into a decision tree process to gain multi-layer probabilities. Bayesian classification methods can stabilize the output probabilities.

An exemplary tracking method is known from EP 1 557 693 B1 which can make use of a mean square deviation of curves.

Disclosure of the Invention

The present invention provides a method and a device for classifying and tracking objects in a surrounding of a vehicle, and a driver assistance system, as recited in the independent claims.

Preferred embodiments are set out in the dependent claims.

According to a first aspect, the invention therefore relates to a device for detecting and tracking objects in a surrounding of a vehicle. An interface is configured to receive, from at least one vehicle sensor of the vehicle, new measurement data acquired at a current measurement cycle. A computing device is configured to determine time coordinates and spatial coordinates of newly identified candidate objects in a surrounding of the vehicle based on the new measurement data, wherein the spatial coordinates of the newly identified candidate objects are defined relative to a global coordinate system. The computing device further associates each newly identified candidate object with at most one tracked candidate object of a plurality of tracked candidate objects identified at earlier measurement cycles, based on distances between the newly identified candidate object and the tracked candidate objects of the plurality of tracked candidate objects. The distance depends on both a difference between the spatial coordinates of the newly identified candidate object and the tracked candidate object and a difference between the time coordinates of the newly identified candidate object and the tracked candidate object. The computing device is configured to update spatial coordinates of the tracked candidate objects using a Kalman filtering method, using the associated newly identified candidate objects. The computing device is further configured to detect at least one tracked real object of the tracked candidate objects based on a time behavior of the spatial coordinates of the candidate objects.

According to a second aspect, the invention provides a driver assistance system for a vehicle, comprising at least one vehicle sensor of the vehicle configured to acquire measurement data, and a device for detecting and tracking objects in a surrounding of a vehicle according to the first aspect of the invention.

According to a third aspect, the invention relates to a method for detecting and tracking objects in a surrounding of a vehicle. New measurement data acquired at a current measurement cycle are received from at least one vehicle sensor of the vehicle. Time coordinates and spatial coordinates of newly identified candidate objects in a surrounding of the vehicle are determined based on the new measurement data. The spatial coordinates of the newly identified candidate objects are defined relative to a global coordinate system. Each newly identified candidate object is associated with at most one tracked candidate object of a plurality of tracked candidate objects identified at earlier measurement cycles, based on distances between the newly identified candidate object and the plurality of tracked candidate objects. The distance depends on both a difference between the spatial coordinates of the newly identified candidate object and the tracked candidate object and a difference between the time coordinates of the newly identified candidate object and the tracked candidate object. Spatial coordinates of the tracked candidate objects are updated using a Kalman filtering method, using the associated newly identified candidate objects. At least one tracked real object of the tracked candidate objects is detected based on a time behavior of the spatial coordinates of the candidate objects.

Advantages of the invention

The present invention applies a space-time input representation and a modification to the association step. By using a distance which depends both on spatial coordinates and time coordinates, tracking is more robust to object movement. An improved object detector performance can be achieved. The tracking can be achieved in a space-time representation, where the distance metric is applied. The invention allows to detect objects based on the time behavior of the spatial coordinates of the candidate objects. For example, if a candidate object is found which follows a trajectory to be expected from a physical object, e.g. a straight line, the candidate object can be identified as a real object. The space-time representation allows to identify such straight movements, i.e. movement-dependent linear patterns.

When the ego vehicle's movement is properly tracked by transforming the object detectors' frames (i.e., coordinates) taken at different time instants into a common coordinate system, and a proper multi-dimensional representation is chosen (2D/3D Cartesian coordinates and a time-like attribute), movement-dependent linear patterns can be formed for each object. Also, if these patterns are detected, their speed and momentum can be calculated to stabilize the classification itself.

According to a further embodiment of the device, the computing device is configured to identify a candidate object as a real object if the time behavior of the spatial coordinates of the candidate object corresponds to an essentially linear (straight) line. By using a space-time representation in the global coordinate system, real objects follow (at least on not too long timescales) straight lines and can therefore be identified based on the time behavior of the spatial coordinates of candidate objects.

According to a further embodiment of the device, the computing device is configured to classify the at least one real object based on a time behavior of the spatial coordinates of the candidate objects. Herein, classifying can comprise classifying the at least one real object as a moving object or a stationary object. The method combines object detection and a classification process where past information is used to stabilize the detection objective, and the classification is supported by the movement derived from the changing state of the continuously updated tracklet. When the ego vehicle's movement is properly tracked, by transforming the radar frames taken at different measurements into the common coordinate system and a proper 3D representation is chosen (e.g. planar radar coordinates and a time-like attribute), movement-dependent linear patterns are formed per object.

According to a further embodiment of the device, the computing device is configured to classify the at least one real object as a stationary object, if the time behavior of the spatial coordinates of the candidate object corresponds to an essentially linear line parallel to a time axis. In a global coordinate system, stationary objects follow straight (linear) lines along the time axis. According to some embodiments, the at least one real object is identified as a stationary object if the time behavior of the spatial coordinates forms a line which includes an angle with the time axis which is smaller than a predefined threshold value.

According to a further embodiment of the device, the computing device is configured to classify the at least one real object as a moving object, if the time behavior of the spatial smaller than a predefined threshold value.

According to a further embodiment of the device, the computing device is configured to classify the at least one real object as a moving object, if the time behavior of the spatial coordinates of the candidate object corresponds to an essentially linear line tilted with respect to a time axis. According to some embodiments, the at least one real object is identified as a moving object if the time behavior of the spatial coordinates forms a line which includes an angle with the time axis which is greater than a predefined threshold value.

According to a further embodiment of the device, the computing device is configured to compute a velocity of the real object based on an angle of the essentially linear line with respect to the time axis. In some embodiments, an angle between a line defined by the spatial coordinates of the real object at different time points and the time axis is computed. The velocity is computed based on the angle. In the space-time representation, each angle is uniquely related to a corresponding velocity.

According to the invention, the distance D (i.e. metric) between a newly identified candidate object and a tracked candidate object is computed by the following formula:

$$D^2 = dx^2 + dy^2 + dz^2 - (vt)^2, \qquad (1)$$

wherein *dx, dy* and *dz* denote differences between the spatial coordinates of the newly identified candidate object and the tracked candidate object for three orthogonal axes of the global coordinate system, wherein v denotes a velocity of the vehicle, and wherein t denotes a difference between the temporal coordinate of the newly identified candidate object and the tracked candidate object. That is, the distance response to a space-time interval. The distance is selected in a way that stationary objects (i.e., moving with the speed of the vehicle) have zero distance. The association of the object therefore takes the movement of the vehicle into account by using a distance which takes care of the ego vehicle movement. This leads to a more robust association. Also, by applying the above formula for the distance, asynchronous measurements merged into one continuous input stream can be handled, as a way of multimodal late-fusion technique. For the multimodal setup, a synchronization method may be present (e.g., timestamp-based).

According to a further embodiment of the device, the computing device is configured to associate the newly identified candidate object with the at most one tracked candidate object using the Hungarian method. Herein, the above metric defined in formula (1) can be used instead of a conventional Euclidean metric.

According to a further embodiment, the device further comprises a first-in first-out, FIFO, memory device, wherein the computing device is configured to store the time coordinates and spatial coordinates of newly identified candidate objects in the FIFO memory device. For an efficient space-time representation, multiple past frames (i.e., time coordinates and spatial coordinates) can be kept.

According to a further embodiment of the device, the computing device is further configured to transform spatial coordinates of the plurality of tracked candidate objects into the global coordinate system before associating each newly identified candidate object with at most one tracked candidate object of the plurality of tracked candidate objects. Therefore, the newly identified candidate objects can easily be associated with the tracked candidate object.

According to a further embodiment of the device, the computing device is further configured to generate a new tracked candidate object based on a newly identified candidate object if said newly identified candidate object is not associated with any tracked candidate object of the plurality of tracked candidate objects. Therefore, the list of tracked candidate objects can be extended.

According to a further embodiment of the device, the computing device is further configured to delete a tracked candidate object of the plurality of tracked candidate objects if no newly identified candidate object is associated with the tracked candidate object. Therefore, objects no longer present in the field of view of the at least one vehicle sensor can be deleted. Such objects are generally no longer relevant for driver assistance systems or the like.

Short description of the drawings

Figure 1     shows a block diagram of a driver assistance system comprising a device for detecting and tracking objects in a surrounding of a vehicle according to an embodiment of the invention;

Figure 2     shows a schematic illustration of tracked candidate objects; and

Figure 3     shows a flow chart of a method for detecting and tracking objects in a surrounding of a vehicle according to an embodiment of the invention.

The numbering of process steps is for clarity and is generally not intended to imply any particular chronological order. In particular, several process steps can also be carried out simultaneously.

Description of the embodiments

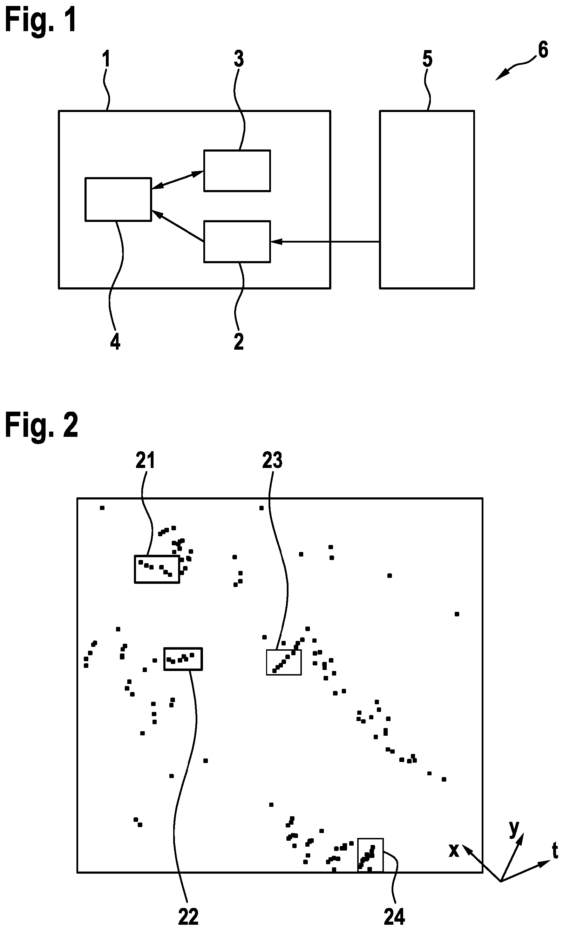

Figure 1 shows a block diagram of a driver assistance system 6 comprising a device 1 for detecting and tracking objects in a surrounding of a vehicle. The device 1 comprises an interface 2 which communicates with one or more vehicle sensors 5 of the vehicle. Preferably, the vehicle sensors may comprise at least one radar sensor. The vehicle sensors 5 can also comprise sensors like cameras, lidar sensors, infrared sensors and the like.

The interface 2 may communicate with the vehicle sensors 5 via a CAN bus or the like. The device 1 receives via the interface 2 new measurement data from the vehicle sensor 5. That is, after each measurement cycle (time stamp), new measurement data is provided to the device 1. The device 1 may receive raw data from the radar sensor 5. According to other embodiments, the data may already be preprocessed.

The device 1 comprises a computing device 4, such as a microprocessor, microcontroller, a field-programmable gate array, or the like. The computing device 4 determines time coordinates and spatial coordinates of newly identified candidate objects in a surrounding of the vehicle based on the newly acquired measurement data. Herein, the term "newly identified candidate object" relates to a particular measurement (i.e., within a present measurement cycle) of an object. The candidate object can be a candidate object (or real object) already tracked by the device 1 or a new object.

The spatial coordinates of the newly identified candidate objects are defined relative to a global coordinate system, which may be given as a current pose of the vehicle, e.g., based on a current velocity of the vehicle.

The computing device 4 associates each newly identified candidate object with one or none tracked candidate object of a plurality of tracked candidate objects. At each time, multiple objects may be tracked, e.g., corresponding to further vehicles, barriers, road signs, pedestrians and so on.

The computing device 4 associates newly identified candidate objects with a tracked candidate object by computing for each tracked candidate object a distance between the newly identified candidate object and said tracked candidate object. The distance is computed based on both a difference between the spatial coordinates of the newly identified candidate object and the tracked candidate object and a difference between the time coordinates of the newly identified candidate object and the tracked candidate object. For example, the distance can be computed using formula (1) above. In general, the difference between the time coordinates of the newly identified candidate object and the tracked candidate object corresponds to the time difference between two subsequent measurements.

The computing device 4 further updates the spatial coordinates of the tracked candidate objects using a Kalman filtering method.

The computing device 4 may comprise a tracking pool for gathering the available Kalman filter instances, i.e., every tracked candidate object has one corresponding instance.

The device 1 further comprises a first-in first-out, FIFO, memory device 3 which stores the time coordinates and spatial coordinates corresponding to several previously measured objects. Tracking means monitoring one stream that contains subsequent frames in which the detected objects are located. For the space-time representation, multiple past frames can be kept. If these frames are in the same global coordinate system, linear patterns can be captured. Further, the memory device 3 may store the global coordinate system.

The computing device 4 detects at least one tracked real object of the tracked candidate objects based on a time behavior of the spatial coordinates of the candidate objects. Herein "real" means that the object moves like an actual physical object and is therefore be identified as a real (physical) object.

The computing device 4 may identify a tracked candidate object as a real object if the time behavior of the spatial coordinates of the candidate object corresponds to a straight line in the space-time representation (coordinate system). The computing device 4 may further classify the at least one real object based on a time behavior of the spatial coordinates of the candidate objects. For example, the computing device 4 may classify the at least one real object as a stationary object, if the time behavior of the spatial coordinates of the candidate object corresponds to an essentially linear line parallel to a time axis. Further, the computing device 4 may classify the at least one real object as a moving object, if the time behavior of the spatial coordinates of the candidate object corresponds to an essentially linear line tilted with respect to the time axis.

The computing device 4 may further compute a velocity of the real object based on a tiltness of the essentially linear line with respect to the time axis. The computing device 4 can compute an angle between the time axis and the essentially linear line. E.g, based upon entries in a look up table, the computing device 4 determines the velocity of the real object based on the angle.

Figure 2 shows a schematic illustration of tracked candidate objects. There are moving objects 21 and 22 and stationary objects 23 and 24. Herein, the stationary objects 23, 24 follow trajectories which are essentially parallel to the time coordinate t.

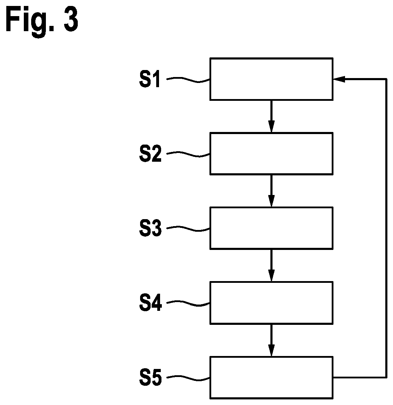

Figure 3 shows a flow chart of a method for detecting and tracking objects in a surrounding of a vehicle. The method can be carried out using the device 1 described above. Likewise, the device 1 can be configured to carry out any of the following method steps or aspects of the method.

In a step S1, tracking is initialized. Further, a tracking pool is initialized which may have an instance count of 0. Further, FIFO memory storage may be allocated. The size can be maximized, e.g., restricted to 5 frames. The current pose of the vehicle may be extracted and stored as a global coordinate system. However, the invention is not restricted to the vehicle coordinate system as a global coordinate system. According to other embodiments, different common global coordinate systems can be used. The memory storage may be relocated.

After a drift occurs in ego vehicle positioning, the global coordinate system changes. The current ego vehicle is then again extracted as a global coordinate system. All tracked candidate objects from the tracking pool are transformed by transforming their spatial coordinates into the new global coordinate system. The new ego vehicle pose is stored as the global coordinate system.

Next, measurement initiates. The current ego vehicle speed is extracted. At least one vehicle sensor of the vehicle acquires measurement data. New measurement data is provided to the device 1 for tracking the objects. The device 1 may be located in the vehicle. At least some functions of the device 1 can also be located outside of the vehicle, e.g., in a distant server.

In a second step S2, the device 1 determines time coordinates and spatial coordinates (i.e., a measurement frame) of newly identified candidate objects in a surrounding of the vehicle based on the newly acquired measurement data. The time coordinates may simply be timestamps. The spatial coordinates of the newly identified candidate objects are defined relative to a global coordinate system. The spatial coordinates may first be defined in a non-global coordinate system and may then be transformed into the global coordinate system.

Together with the measurement data, the ego vehicle pose is tracked in the global coordinate system (i.e., common or "world" coordinate system) for each time instant where measurements are taken.

Moreover, a proper calibration may be required to be able to do affine transformation based coordination system changes between sensor coordinate systems, the space-time representation and the transformation into the global coordinate system.

**In** a step S3, the device 1 associates each newly identified candidate object with at most one tracked candidate object of a plurality of tracked candidate objects based on distances between the newly identified candidate object and the plurality of tracked candidate objects. The distance depends on both a difference between the spatial coordinates of the newly identified candidate object and the tracked candidate object under consideration and a difference between the time coordinates of the newly identified candidate object and the tracked candidate object under consideration.

The difference between the time coordinates can be set to 0 in the first iteration and can otherwise be set to the difference between a current timestamp and a stored timestamp.

It can also be possible to store a 4-dimensional vector {x, y, z, vt} associated with each newly acquired object, comprising the spatial coordinates x, y, z and a parameter

$$vt = (deltaT \cdot ego\ vehicle\ speed - length\ value),$$

where deltaT corresponds to the difference between a current timestamp and a stored timestamp and the length value is set based on a length of the vehicle. The transformed measurement frame {x, y, z, vt} is pushed into the memory storage 3.

In a fourth step S4, the spatial coordinates of the tracked candidate objects are updated, using a Kalman filtering method. In space-time tracking, the past information is used to stabilize the association step of the selected Kalman filter, by the movement derived from the state change of the continuously updated tracklet (tracked candidate object).

Object detectors do have some noise arising from the measuring technique. Also, the tracking process can have ambiguity. These have to be modeled, a common choice is to use an additional normal distribution, and both have a dataset dependent hyperparameter (variance). The tracking is based on Kalman filtering. Herein, the state-transition model, the observation model, the measurement noise and the process noise are identical to the standard Kalman filtering method. The noises can be the above-mentioned normal distributions, e.g., with a variance of 0.01, and a constant state-transition model can be used.

In the Kalman-update step, the current tracked state of the object is updated. Herein, the associated newly identified candidate object relates to new measurements taken into account in the Kalman method. If there is no match for some newly identified candidate object, a new tracked candidate object is generated. If none of the newly identified candidate objects is associated with one of the existing tracked candidate objects, the tracked candidate object is deleted.

Optionally, for currently available tracked candidate objects, further classification can be applied. The classification can be dynamic or stationary, depending on the tracked candidate object attributes available in Kalman filter inner states, e.g., momentum or speed.

In step S5, at least one tracked real object of the tracked candidate objects is detected based on a time behavior of the spatial coordinates of the candidate objects. The method may further comprise classifying the real objects (e.g. as stationary or moving objects).

The method can then repeat again from step S1.

**Claims**

1. A device (1) for detecting and tracking objects in a surrounding of a vehicle, comprising:

   an interface (2) configured to receive, from at least one vehicle sensor (5) of the vehicle, new measurement data acquired at a current measurement cycle; and
   a computing device (4) configured to:

   determine time coordinates and spatial coordinates of newly identified candidate objects in a surrounding of the vehicle based on the new measurement data, wherein the spatial coordinates of the newly identified candidate objects are defined relative to a global coordinate system;
   associate each newly identified candidate object with at most one tracked candidate object (21-24) of a plurality of tracked candidate objects (21-24) identified at earlier measurement cycles, based on distances between the newly identified candidate object and the plurality of tracked candidate objects (21-24), wherein the distance depends on both a difference between the spatial coordinates of the newly identified candidate object and the tracked candidate object and a difference between the time coordinates of the newly identified candidate object and the tracked candidate object;
   update spatial coordinates of the tracked candidate objects (21-24) using a Kalman filtering method, using the associated newly identified candidate objects; and
detect at least one tracked real object of the tracked candidate objects based on a time behavior of the spatial coordinates of the candidate objects (21-24);
**characterized in that** the distance $D$ between a newly identified candidate object and a tracked candidate object (21-24) is computed by the following formula:

$$D^2 = dx^2 + dy^2 + dz^2 - (vt)^2,$$

wherein $dx$, $dy$ and $dz$ denote differences between the spatial coordinates x, y, z of the newly identified candidate object and the tracked candidate object (21-24) for three orthogonal axes of the global coordinate system, wherein v denotes a velocity of the vehicle, and wherein $t$ denotes a difference between the temporal coordinate of the newly identified candidate object and the tracked candidate object (21-24).

2. The device (1) according to claim 1, wherein the computing device (4) is configured to identify a candidate object as a real object if the time behavior of the spatial coordinates x, y, z of the candidate object (21-24) corresponds to a linear line.

3. The device (1) according to claim 1 or 2, wherein the computing device (4) is configured to classify the at least one real object based on a time behavior of the spatial coordinates of the candidate objects (21-24).

4. The device (1) according to claim 3, wherein the computing device (4) is configured to classify the at least one real object as a stationary object, if the time behavior of the spatial coordinates of the candidate object (21-24) corresponds to a linear line parallel to a time axis.

5. The device (1) according to claim 3 or 4, wherein the computing device (4) is configured to classify the at least one real object as a moving object, if the time behavior of the spatial coordinates of the candidate object (21-24) corresponds to a linear line tilted with respect to a time axis.

6. The device (1) according to claim 5, wherein the computing device (4) is configured to compute a velocity of the real object based on an angle of the linear line with respect to the time axis.

7. The device (1) according to any of the preceding claims, wherein the computing device (4) is further configured to generate a new tracked candidate object (21-24) if a newly identified candidate object is not associated with a tracked candidate object (21-24) of the plurality of tracked candidate objects (21-24).

8. A driver assistance system (6) for a vehicle, comprising

at least one vehicle sensor (5) of the vehicle, configured to acquire measurement data; and
a device (1) for detecting and tracking objects in a surrounding of a vehicle according to any of the preceding claims.

9. A method for detecting and tracking objects in a surrounding of a vehicle, comprising the following steps:

receiving (S1), from at least one vehicle sensor (5) of the vehicle, new measurement data acquired at a current measurement cycle;
determining (S2) time coordinates and spatial coordinates of newly identified candidate objects in a surrounding of the vehicle based on the new measurement data, wherein the spatial coordinates of the newly identified candidate objects are defined relative to a global coordinate system;
associating (S3) each newly identified candidate object with at most one tracked candidate object (21-24) of a plurality of tracked candidate objects (21-24) identified at earlier measurement cycles, based on distances between the newly identified candidate object and the plurality of tracked candidate objects (21-24), wherein the distance depends on both a difference between the spatial coordinates of the newly identified candidate object and the tracked candidate object and a difference between the time coordinates of the newly identified candidate object and the tracked candidate object;
updating (S4) spatial coordinates of the tracked candidate objects (21-24) using a Kalman filtering method, using the associated newly identified candidate objects; and
detecting (S5) at least one tracked real object of the tracked candidate objects based on a time behavior of the spatial coordinates of the candidate objects (21-24)
**characterized in that** the distance *D* between a newly identified candidate object and a tracked candidate object (21-24) is computed by the following formula:

$$D^2 = dx^2 + dy^2 + dz^2 - (vt)^2,$$

wherein *dx, dy* and *dz* denote differences between the spatial coordinates x, y, z of the newly identified candidate object and the tracked candidate object (21-24) for three orthogonal axes of the global coordinate system, wherein v denotes a velocity of the vehicle, and wherein *t* denotes a difference between the temporal coordinate of the newly identified candidate object and the tracked candidate object (21-24).

**Patentansprüche**

1. Vorrichtung (1) zum Detektieren und Verfolgen von Objekten in einer Umgebung eines Fahrzeugs, die Folgendes umfasst:

   eine Schnittstelle (2), die dazu ausgelegt ist, von mindestens einem Fahrzeugsensor (5) des Fahrzeugs neue Messdaten zu empfangen, die in einem aktuellen Messzyklus erfasst wurden; und
   eine Rechenvorrichtung (4), die zu Folgendem ausgelegt ist:

   Bestimmen von Zeitkoordinaten und räumlichen Koordinaten neu erkannter Kandidatenobjekte in einer Umgebung des Fahrzeugs basierend auf den neuen Messdaten, wobei die räumlichen Koordinaten der neu erkannten Kandidatenobjekte relativ zu einem globalen Koordinatensystem definiert sind;
   Zuordnen jedes neu erkannten Kandidatenobjekts zu höchstens einem verfolgten Kandidatenobjekt (21-24) einer Mehrzahl verfolgter Kandidatenobjekte (21-24), die in früheren Messzyklen erkannt wurden, basierend auf Abständen zwischen dem neu erkannten Kandidatenobjekt und der Mehrzahl verfolgter Kandidatenobjekte (21-24), wobei der Abstand von sowohl einer Differenz zwischen den räumlichen Koordinaten des neu erkannten Kandidatenobjekts und des verfolgten Kandidatenobjekts als auch einer Differenz zwischen den Zeitkoordinaten des neu erkannten Kandidatenobjekts und des verfolgten Kandidatenobjekts abhängt;
   Aktualisieren räumlicher Koordinaten der verfolgten Kandidatenobjekte (21-24) unter Verwendung eines Kalman-Filterverfahrens unter Verwendung der zugeordneten neu erkannten Kandidatenobjekte; und
   Detektieren mindestens eines verfolgten realen Objekts der verfolgten Kandidatenobjekte basierend auf einem Zeitverhalten der räumlichen Koordinaten der Kandidatenobjekte (21-24);
   **dadurch gekennzeichnet, dass** der Abstand *D* zwischen einem neu erkannten Kandidatenobjekt und einem verfolgten Kandidatenobjekt (21-24) durch die folgende Formel berechnet wird:

   $$D^2 = dx^2 + dy^2 + dz^2 - (vt)^2,$$

   wobei *dx, dy* und *dz* Differenzen zwischen den räumlichen Koordinaten x, y, z des neu erkannten Kandidatenobjekts und des verfolgten Kandidatenobjekts (21-24) für drei orthogonale Achsen des globalen Koordinatensystems bezeichnen, wobei *v* eine Geschwindigkeit des Fahrzeugs bezeichnet, und wobei t eine Differenz zwischen der Zeitkoordinate des neu erkannten Kandidatenobjekts und des verfolgten Kandidatenobjekts (21-24) bezeichnet.

2. Vorrichtung (1) nach Anspruch 1, wobei die Rechenvorrichtung (4) dazu ausgelegt ist, ein Kandidatenobjekt als ein reales Objekt zu erkennen, wenn das Zeitverhalten der räumlichen Koordinaten x, y, z des Kandidatenobjekts (21-24) einer linearen Linie entspricht.

3. Vorrichtung (1) nach Anspruch 1 oder 2, wobei die Rechenvorrichtung (4) dazu ausgelegt ist, das mindestens eine reale Objekt basierend auf einem Zeitverhalten der räumlichen Koordinaten der Kandidatenobjekte (21-24) zu klassifizieren.

4. Vorrichtung (1) nach Anspruch 3, wobei die Rechenvorrichtung (4) dazu ausgelegt ist, das mindestens eine reale Objekt als ein stationäres Objekt zu klassifizieren, wenn das Zeitverhalten der räumlichen Koordinaten des Kandidatenobjekts (21-24) einer linearen Linie parallel zu einer Zeitachse entspricht.

**5.** Vorrichtung (1) nach Anspruch 3 oder 4, wobei die Rechenvorrichtung (4) dazu ausgelegt ist, das mindestens eine reale Objekt als ein sich bewegendes Objekt zu klassifizieren, wenn das Zeitverhalten der räumlichen Koordinaten des Kandidatenobjekts (21-24) einer linearen Linie entspricht, die in Bezug auf eine Zeitachse geneigt ist.

**6.** Vorrichtung (1) nach Anspruch 5, wobei die Rechenvorrichtung (4) dazu ausgelegt ist, eine Geschwindigkeit des realen Objekts basierend auf einem Winkel der linearen Linie in Bezug auf die Zeitachse zu berechnen.

**7.** Vorrichtung (1) nach einem der vorhergehenden Ansprüche, wobei die Rechenvorrichtung (4) ferner dazu ausgelegt ist, ein neues verfolgtes Kandidatenobjekt (21-24) zu erzeugen, wenn ein neu erkanntes Kandidatenobjekt keinem verfolgten Kandidatenobjekt (21-24) der Mehrzahl verfolgter Kandidatenobjekte (21-24) zugeordnet wird.

**8.** Fahrerassistenzsystem (6) für ein Fahrzeug, das Folgendes umfasst

mindestens einen Fahrzeugsensor (5) des Fahrzeugs, der dazu ausgelegt ist, Messdaten zu erfassen; und
eine Vorrichtung (1) zum Detektieren und Verfolgen von Objekten in einer Umgebung eines Fahrzeugs nach einem der vorhergehenden Ansprüche.

**9.** Verfahren zum Detektieren und Verfolgen von Objekten in einer Umgebung eines Fahrzeugs, das die folgenden Schritte umfasst:

Empfangen (S1), von mindestens einem Fahrzeugsensor (5) des Fahrzeugs, neuer Messdaten, die in einem aktuellen Messzyklus erfasst wurden;
Bestimmen (S2) von Zeitkoordinaten und räumlichen Koordinaten neu erkannter Kandidatenobjekte in einer Umgebung des Fahrzeugs basierend auf den neuen Messdaten, wobei die räumlichen Koordinaten der neu erkannten Kandidatenobjekte relativ zu einem globalen Koordinatensystem definiert sind;
Zuordnen (S3) jedes neu erkannten Kandidatenobjekts zu höchstens einem verfolgten Kandidatenobjekt (21-24) einer Mehrzahl verfolgter Kandidatenobjekte (21-24), die in früheren Messzyklen erkannt wurden, basierend auf Abständen zwischen dem neu erkannten Kandidatenobjekt und der Mehrzahl verfolgter Kandidatenobjekte (21-24), wobei der Abstand von sowohl einer Differenz zwischen den räumlichen Koordinaten des neu erkannten Kandidatenobjekts und des verfolgten Kandidatenobjekts als auch einer Differenz zwischen den Zeitkoordinaten des neu erkannten Kandidatenobjekts und des verfolgten Kandidatenobjekts abhängt;
Aktualisieren (S4) räumlicher Koordinaten der verfolgten Kandidatenobjekte (21-24) unter Verwendung eines Kalman-Filterverfahrens unter Verwendung der zugeordneten neu erkannten Kandidatenobjekte; und
Detektieren (S5) mindestens eines verfolgten realen Objekts der verfolgten Kandidatenobjekte basierend auf einem Zeitverhalten der räumlichen Koordinaten der Kandidatenobjekte (21-24)
**dadurch gekennzeichnet, dass** der Abstand $D$ zwischen einem neu erkannten Kandidatenobjekt und einem verfolgten Kandidatenobjekt (21-24) durch die folgende Formel berechnet wird:

$$D^2 = dx^2 + dy^2 + dz^2 - (vt)^2,$$

wobei $dx, dy$ und $dz$ Differenzen zwischen den räumlichen Koordinaten x, y, z des neu erkannten Kandidatenobjekts und des verfolgten Kandidatenobjekts (21-24) für drei orthogonale Achsen des globalen Koordinatensystems bezeichnen, wobei v eine Geschwindigkeit des Fahrzeugs bezeichnet, und wobei t eine Differenz zwischen der Zeitkoordinate des neu erkannten Kandidatenobjekts und des verfolgten Kandidatenobjekts (21-24) bezeichnet.

**Revendications**

**1.** Dispositif (1) de détection et de suivi d'objets dans un environnement d'un véhicule, comprenant :

une interface (2) configurée pour recevoir, en provenance d'au moins un capteur de véhicule (5) du véhicule, des nouvelles données de mesure acquises dans un cycle de mesure actuel ; et
un dispositif informatique (4) configuré pour :

déterminer des coordonnées temporelles et des coordonnées spatiales d'objets candidats nouvellement identifiés dans un environnement du véhicule sur la base des nouvelles données de mesure, dans lequel les coordonnées spatiales des objets candidats nouvellement identifiés sont définies par rapport à un système de coordonnées global ;

associer chaque objet candidat nouvellement identifié à au plus un objet candidat suivi (21-24) d'une pluralité d'objets candidats suivis (21-24) identifiés dans des cycles de mesure antérieurs, sur la base de distances entre l'objet candidat nouvellement identifié et la pluralité d'objets candidats suivis (21-24), dans lequel la distance dépend à la fois d'une différence entre les coordonnées spatiales de l'objet candidat nouvellement identifié et de l'objet candidat suivi et d'une différence entre les coordonnées temporelles de l'objet candidat nouvellement identifié et de l'objet candidat suivi ;

mettre à jour des coordonnées spatiales des objets candidats suivis (21-24) en utilisant un procédé de filtrage de Kalman, en utilisant les objets candidats nouvellement identifiés associés ; et

détecter au moins un objet réel suivi des objets candidats suivis sur la base d'un comportement temporel des coordonnées spatiales des objets candidats (21-24) ;

**caractérisé en ce que** la distance D entre un objet candidat nouvellement identifié et un objet candidat suivi (21-24) est calculée par la formule suivante :

$$D^2 = dx^2 + dy^2 + dz^2 - (vt)^2,$$

où *dx, dy* et *dz* désignent des différences entre les coordonnées spatiales x, y, z de l'objet candidat nouvellement identifié et de l'objet candidat suivi (21-24) pour trois axes orthogonaux du système de coordonnées global, où v désigne une vitesse du véhicule, et où t désigne une différence entre les coordonnées temporelles de l'objet candidat nouvellement identifié et de l'objet candidat suivi (21-24).

2. Dispositif (1) selon la revendication 1, dans lequel le dispositif informatique (4) est configuré pour identifier un objet candidat en tant qu'objet réel si le comportement temporel des coordonnées spatiales x, y, z de l'objet candidat (21-24) correspond à une ligne linéaire.

3. Dispositif (1) selon la revendication 1 ou 2, dans lequel le dispositif informatique (4) est configuré pour classer l'au moins un objet réel sur la base d'un comportement temporel des coordonnées spatiales des objets candidats (21-24).

4. Dispositif (1) selon la revendication 3, dans lequel le dispositif informatique (4) est configuré pour classer l'au moins un objet réel en tant qu'objet stationnaire, si le comportement temporel des coordonnées spatiales de l'objet candidat (21-24) correspond à une ligne linéaire parallèle à un axe temporel.

5. Dispositif (1) selon la revendication 3 ou 4, dans lequel le dispositif informatique (4) est configuré pour classer l'au moins un objet réel en tant qu'objet mobile, si le comportement temporel des coordonnées spatiales de l'objet candidat (21-24) correspond à une ligne linéaire inclinée par rapport à un axe temporel.

6. Dispositif (1) selon la revendication 5, dans lequel le dispositif informatique (4) est configuré pour calculer une vitesse de l'objet réel sur la base d'un angle de la ligne linéaire par rapport à l'axe temporel.

7. Dispositif (1) selon l'une quelconque des revendications précédentes, dans lequel le dispositif informatique (4) est en outre configuré pour générer un nouvel objet candidat suivi (21-24) si un objet candidat nouvellement identifié n'est pas associé à un objet candidat suivi (21-24) de la pluralité d'objets candidats suivis (21-24).

8. Système d'assistance au conducteur (6) pour un véhicule, comprenant

au moins un capteur de véhicule (5) du véhicule, configuré pour acquérir des données de mesure ; et
un dispositif (1) de détection et de suivi d'objets dans un environnement d'un véhicule selon l'une quelconque des revendications précédentes.

9. Procédé de détection et de suivi d'objets dans un environnement d'un véhicule, comprenant les étapes suivantes :

la réception (S1), en provenance d'au moins un capteur de véhicule (5) du véhicule, de nouvelles données de mesure acquises dans un cycle de mesure actuel ;
la détermination (S2) de coordonnées temporelles et de coordonnées spatiales d'objets candidats nouvellement identifiés dans un environnement du véhicule sur la base des nouvelles données de mesure, dans lequel les coordonnées spatiales des objets candidats nouvellement identifiés sont définies par rapport à un système de coordonnées global ;

l'association (S3) de chaque objet candidat nouvellement identifié à au plus un objet candidat suivi (21-24) d'une pluralité d'objets candidats suivis (21-24) identifiés dans des cycles de mesure antérieurs, sur la base de distances entre l'objet candidat nouvellement identifié et la pluralité d'objets candidats suivis (21-24), dans lequel la distance dépend à la fois d'une différence entre les coordonnées spatiales de l'objet candidat nouvellement identifié et de l'objet candidat suivi et d'une différence entre les coordonnées temporelles de l'objet candidat nouvellement identifié et de l'objet candidat suivi ;

la mise à jour (S4) de coordonnées spatiales des objets candidats suivis (21-24) en utilisant un procédé de filtrage de Kalman, en utilisant les objets candidats nouvellement identifiés associés ; et

la détection (S5) d'au moins un objet réel suivi des objets candidats suivis sur la base d'un comportement temporel des coordonnées spatiales des objets candidats (21-24)

**caractérisé en ce que** la distance $D$ entre un objet candidat nouvellement identifié et un objet candidat suivi (21-24) est calculée par la formule suivante :

$$D^2 = dx^2 + dy^2 + dz^2 - (vt)^2,$$

où $dx, dy$ et $dz$ désignent des différences entre les coordonnées spatiales x, y, z de l'objet candidat nouvellement identifié et de l'objet candidat suivi (21-24) pour trois axes orthogonaux du système de coordonnées global, où v désigne une vitesse du véhicule, et où t désigne une différence entre les coordonnées temporelles de l'objet candidat nouvellement identifié et de l'objet candidat suivi (21-24).

# Fig. 1

# Fig. 2

# Fig. 3

S1

S2

S3

S4

S5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2021080558 A1
- US 2015198711 A1
- US 2016018219 A1
- EP 1557693 B1